# EUROPÄISCHE PATENTSCHRIFT

(11) **EP 0 765 352 B1**
(45) Veröffentlichungstag und Bekanntmachung des Hinweises auf die Patenterteilung: **28.01.1998**
(21) Anmeldenummer: 95921783.7
(22) Anmeldetag: 31.05.1995
(51) Int. Cl.: C08F 218/06, C08F 220/04, C08F 222/02, C11D 3/37

(54) **VINYLFORMIATEINHEITEN ENTHALTENDE COPOLYMERISATE, VERFAHREN ZU IHRER HERSTELLUNG UND IHRE VERWENDUNG IN WASCH- UND REINIGUNGSMITTELN**
COPOLYMERS CONTAINING VINYL FORMATE UNITS, METHOD OF PRODUCING THEM AND THEIR USE IN WASHING AND CLEANING AGENTS
COPOLYMERES CONTENANT DES UNITES VINYLFORMIATE, LEUR PROCEDE DE PREPARATION ET LEUR UTILISATION DANS DES DETERGENTS ET DES NETTOYANTS

(30) Priorität: 16.06.1994 DE 4420920
(43) Veröffentlichungstag der Anmeldung: 02.04.1997
(73) Patentinhaber: BASF AKTIENGESELLSCHAFT, 67056 Ludwigshafen (DE)
(72) Erfinder: BOECKH, Dieter, D-67117 Limburgerhof (DE); KISTENMACHER, Axel, D-67061 Ludwigshafen (DE); DENZINGER, Walter, D-67346 Speyer (DE); RÜHL, Thomas, D-67227 Frankenthal (DE); FUNHOFF, Angelika, D-69198 Schriesheim (DE); BAUR, Richard, D-67112 Mutterstadt (DE); KUD, Alexander, D-55234 Eppelsheim (DE); SCHWENDEMANN, Volker, D-67434 Neustadt (DE)
(86) Internationale Anmeldenummer: EP9502053
(87) Internationale Veröffentlichungsnummer: WO9534587

(56) Entgegenhaltungen:
- EP-A- 0 106 110
- EP-A- 0 106 991
- EP-A- 0 389 724
- EP-A- 0 441 022
- US-A- 3 268 491
- US-A- 3 887 480
- US-A- 5 191 048

## Beschreibung

Die Erfindung betrifft Vinylformiateinheiten enthaltende Copolymerisate, Verfahren zu ihrer Herstellung durch Copolymerisieren von Vinylformiat in Gegenwart von Radikale bildenden Polymerisationsinitiatoren und die Verwendung der Copolymerisate als Zusatz zu Wasch- und Reinigungsmitteln.

Aus der US-A-3 268 491 ist ein Verfahren zur Herstellung von Copolymerisaten aus Vinylacetat und monoethylenisch ungesättigten Dicarbonsäuren durch Copolymerisieren der Monomeren in wäßrigem Medium bei pH-Werten von 3 bis 6 in Gegenwart von Redoxkatalysatoren bekannt. Als oxydierende Komponente des Redoxsystems werden vorzugsweise Persulfate eingesetzt, während als reduzierende Komponente Sulfite oder Thiosulfate verwendet werden. Die oxydierende Komponente wird dabei immer im molaren Überschuß gegenüber der reduzierenden Komponente angewandt. Man erhält alternierende Copolymerisate.

Aus der EP-A-0 441 022 sind Copolymerisate aus monoethylenisch ungesättigten Dicarbonsäuren und monoethylenisch ungesättigten Monocarbonsäuren bekannt, die durch Copolymerisieren von 3 bis 25 Gew.-% mindestens einer monoethylenisch ungesättigten Dicarbonsäure und 75 bis 97 Gew.-% mindestens einer monoethylenisch ungesättigten Monocarbonsäure und gegebenenfalls carboxylgruppenfreien ethylenisch ungesättigten Monomeren in Gegenwart von wasserlöslichen Polymerisationsinitiatoren, Kupfersalzen als Polymerisationsmoderator und einer Base hergestellt werden. Als carboxylgruppenfreies ethylenisch ungesättigtes Monomer ist auch Vinylacetat genannt, jedoch nicht mit Beispielen belegt. Unter den beschriebenen Polymerisationsbedingungen beobachtet man aber eine starke Zersetzung des Vinylacetats bzw. die Bildung von Homopolymerisaten des Vinylacetats.

In der US-A-3 887 480 wird die Herstellung von Terpolymerisaten aus 35 bis 70 Mol-% Maleinsäure, 20 bis 45 Mol-% Vinylacetat und 2 bis 40 Mol-% Acrylsäure in wäßrigem Medium in Gegenwart von 18 bis 40 Gew.-% Persulfat und von Bisulfit beschrieben, wobei Persulfat gegenüber Bisulfit im molaren Überschuß eingesetzt wird.

Bei den oben beschriebenen Verfahren werden die ethylenisch ungesättigten Carbonsäuren zumindest teilweise neutralisiert, weil sonst eine zu starke Zersetzung des Vinylacetats während der Polymerisation eintreten würde.

Da Vinylformiat noch rascher hydrolysiert als Vinylacetat, ist die Herstellung von Copolymerisaten des Vinylformiats noch weitaus schwieriger als die Herstellung von Vinylacetatcopolymerisaten.

Der Erfindung liegt die Aufgabe zugrunde, neue Stoffe zur Verfügung zu stellen und Additive für Wasch- und Reinigungsmittel aufzuzeigen.

Die Aufgabe wird erfindungsgemäß gelöst mit Vinylformiateinheiten enthaltenden Copolymerisaten, die
(a) 5 bis 90 Mol-% Vinylformiateinheiten,
(b) 10 bis 95 Mol-% Einheiten von monoethylenisch ungesättigten Carbonsäuren,
(c) 0 bis 70 Mol-% Einheiten von monoethylenisch ungesättigten Dicarbonsäuren und
(d) 0 bis 30 Mol-% Einheiten von anderen monoethylenisch ungesättigten Monomeren
einpolymerisiert enthalten und K-Werte von mindestens 8 (bestimmt nach H. Fikentscher in 1 gew.-%iger wäßriger Lösung am Na-Salz der Copolymerisate bei pH 7 und 25°C) aufweisen.

Gegenstand der Erfindung ist außerdem ein Verfahren zur Herstellung von Vinylformiateinheiten enthaltenden Copolymerisaten, bei dem man Monomermischungen aus
(a) 5 bis 90 Mol-% Vinylformiat,
(b) 10 bis 95 Mol-% monoethylenisch ungesättigten Carbonsäuren,
(c) 0 bis 70 Mol-% monoethylenisch ungesättigten Dicarbonsäuren und
(d) 0 bis 30 Mol-% anderen monoethylenisch ungesättigten Monomeren
in wäßrigem Medium oder in einem organischen Lösemittel in Gegenwart von Radikale bildenden Polymerisationsinitiatoren copolymerisiert.

Ein weiterer Gegenstand der Erfindung ist die Verwendung der Vinylformiateinheiten enthaltenden Copolymerisate sowie der daraus durch Hydrolyse und/oder Oxidation erhältlichen Vinylalkoholeinheiten aufweisenden Copolymerisate als Zusatz zu Wasch- und Reinigungsmitteln.

Die zur Copolymerisation eingesetzten Monomermischungen enthalten als Monomer der Gruppe (a) Vinylformiat und als Monomere der Gruppe (b) mindestens eine monoethylenisch ungesättigte Monocarbonsäure. Die Monomeren (b) leiten sich beispielsweise von monoethylenisch ungesättigten Monocarbonsäuren mit 3 bis 8, vorzugsweise 3 bis 5 C-Atomen im Molekül ab. Beispiele hierfür sind Acrylsäure, Methacrylsäure, Vinylessigsäure und Crotonsäure. Vorzugsweise setzt man aus dieser Gruppe von Monomeren Acrylsäure, Methacrylsäure oder Mischungen aus Acrylsäure und Methacrylsäure in jedem beliebigen Verhältnis ein.

Die erfindungsgemäßen Copolymerisate enthalten Einheiten von monoethylenisch ungesättigten Carbonsäuren in Mengen von 10 bis 95, vorzugsweise 20 bis 70 Mol-%.

Als Monomere der Gruppe (c) kommen monoethylenisch ungesättigte Dicarbonsäuren in Betracht. Solche Dicarbonsäuren haben beispielsweise 4 bis 8 C-Atome im Molekül. Beispiele für Monomere (c) sind Maleinsäure, Fumarsäure, Itaconsäure und Citraconsäure. Soweit diese Dicarbonsäure Anhydride bilden können, kann man auch die Anhydride einsetzen. Von den Monomeren (c) wird - sofern sie bei der Copolymerisation anwesend sind - vorzugsweise Maleinsäure oder Maleinsäureanhydrid verwendet. Die Copolymerisate enthalten Einheiten der Monomeren (c) in Mengen von 0 bis 70, vorzugsweise 5 bis 55 Mol.-%.

Bevorzugt sind Copolymerisate, die
(a) 25 bis 75 Mol-% Vinylformiateinheiten,
(b) 20 bis 70 Mol-% Einheiten von monoethylenisch ungesättigten Carbonsäuren und
(c) 5 bis 55 Mol-% Einheiten von monoethylenisch ungesättigten Dicarbonsäuren
einpolymerisiert enthalten.

Die Monomermischungen können gegebenenfalls (d) andere copolymerisierbare monoethylenisch ungesättigte Monomere enthalten, z.B. Acrylamid, Methacrylamid, 2-Acrylamido-2-methylpropansulfonsäure, Vinylsulfonsäure, Allylsulfonsäure, Methallylsulfonsäure, Vinylphosphonsäure, Allylphosphonsäure, Acrylnitril, Methacrylnitril, Dimethylaminoethylacrylat, Diethylaminoethylacrylat, Diethylaminoethylmethacrylat, N-Vinylpyrrolidon, N-Vinylformamid, N-Vinylimidazol, N-Vinylimidazolin, 1-Vinyl-2-methyl-imidazol, 1-Vinyl-2-methyl-imidazolin und Hydroxyalkylester mit 2 bis 6 C-Atomen in der Hydroxyalkylgruppe von monoethylenisch ungesättigten 3 bis 6 C-Atome enthaltenden Carbonsäuren wie Hydroxyethylacrylat, Hydroxyethylmethacrylat, Hydroxy-n-propylacrylat, Hydroxy-isopropylacrylat, Hydroxy-isobutylacrylat, Hydroxyethylmonomaleinat, Butandiol-1,4-monoacrylat und Hydroxy-n-butyldimaleinat. Die Monomeren der Gruppe (d) werden bei der Copolymerisation in Mengen von 0 bis 30 Mol-% eingesetzt. Falls diese Monomeren zur Modifizierung der Copolymerisate verwendet werden, werden sie vorzugsweise in Mengen von 5 bis 20 Mol-% verwendet.

Die Copolymerisation der Monomeren (a) und (b) und gegebenenfalls (c) und/oder (d) wird in wäßrigem Medium oder in einem organischen Lösemittel durchgeführt. Unter wäßrigem Medium soll Wasser allein als Lösemittel als auch Mischungen aus Wasser mit bis zu 50 Gew.-% anderen damit mischbaren Lösemitteln verstanden werden. Mit Wasser mischbare Lösemittel sind beispielsweise Dioxan, Tetrahydrofuran, Ethylenglykoldimethylether, Ethylenglykoldiethylether, Diethylenglykoldimethylether, Aceton, Methylethylketon, Cyclohexanon, Methylglykolacetat sowie die einwertigen C₁- bis C₄-Alkohole wie Methanol, Ethanol, Isopropanol, n-Butanol, sec.-Butanol, tert.-Butanol und Ethylenglykol.

Die Copolymerisation kann beispielsweise auch als Fällungspolymerisation in C₁-C₃-Alkylbenzolen, aliphatischen, acyclischen C₄-C₈-Ketonen, chlorierten C₁-C₄-Alkanen oder deren Mischungen durchgeführt werden. Im einzelnen eignen sich folgende inerte organische Lösemittel für die Fällungspolymerisation:

Benzol, Toluol, p-Xylol, m-Xylol, o-Xylol sowie deren technische Gemische, Ethylbenzol, Diethylbenzol, Methylethylbenzol, Methylenchlorid, 1,2-Dichlorethan, 1,1-Dichlorethan, 1,1,1-Trichlorethan, 1,1,2-Trichlorethan, Perchlorethylen, 1,2-Dichlorpropan, Butylchlorid, Fluorkohlenwasserstoffe, 2-Butanon, 3-Pentanon sowie 3-Hexanon.

Die Copolymerisation kann auch als Lösungspolymerisation in mindestens einem der o.g. Ether oder Ketone oder in Methylglykolacetat, Ethylglykolacetat sowie einwertigen C₁-C₄-Alkoholen durchgeführt werden. Falls man als Monomere der Gruppe (c) Dicarbonsäureanhydride einsetzt, wird die Copolymerisation vorzugsweise in Abwesenheit von Alkoholen durchgeführt, so daß Copolymerisate mit Anhydridgruppen entstehen, die weiteren chemischen Umsetzungen zugänglich sind.

Die Monomeren (a) und (b) sowie gegebenenfalls (c) und/oder (d) können auch nach Art einer Suspensionspolymerisation in mindestens einem aliphatischen Kohlenwasserstoff miteinander copolymerisiert werden. Geeignete aliphatische Kohlenwasserstoffe sind beispielsweise Pentan, Hexan, Heptan, Octan, Isooctan, Cyclohexan, Methylcyclohexan, Dimethylcyclohexan, Ethylcyclohexan, Diethylcyclohexan und Gemische der genannten Kohlenwasserstoffe. Von den in Betracht kommenden aliphatischen Kohlenwasserstoffen können sämtliche Isomeren oder Mischungen eingesetzt werden.

Bei der Fällungs- oder Suspensionscopolymerisation ist es vorteilhaft, zusätzlich in Gegenwart von Schutzkolloiden zu polymerisieren. Geeignete Schutzkolloide sind beispielsweise Copolymerisate aus Maleinsäureanhydrid und Vinylalkylethern, die 1 bis 20 Kohlenstoffatome in der Alkylgruppe enthalten oder Copolymerisate aus Maleinsäureanhydrid und Olefinen mit 8 bis 20 Kohlenstoffatomen sowie deren Monoester mit C₁₀-C₂₀-Alkoholen oder Monoamide mit C₁₀-C₂₀-Aminen. Außerdem eignen sich Polyalkylvinylether, deren Alkylgruppe 1 bis 20 Kohlenstoffatome enthält als Schutzkolloid. Falls bei der Copolymerisation ein Schutzkolloid eingesetzt wird, betragen die Mengen üblicherweise 0,05 bis 4 Gew.-%, bezogen auf die zu polymerisierenden Monomeren.

Die Copolymerisation wird in einer bevorzugten Ausführungsform in Wasser oder in Mischungen aus Wasser und damit mischbaren Lösemitteln wie Ethanol, n-Propanol, Methanol, Ethylenglycol, oligomeren wasserlöslichen Alkylenglycolen und ethoxylierten C₁-C₁₈-Alkoholen mit 1-20 Ethylenoxidgruppen, Isopropanol, Aceton, Methylethylketon, Tetrahydrofuran und Dioxan durchgeführt.

Die Copolymerisation kann diskontinuierlich, halbkontinuierlich oder kontinuierlich in hierfür geeigneten Reaktoren ausgeführt werden. Die Initiierung der Polymerisation kann durch eine einmalige Zugabe eines Polymerisationsinitiators und gegebenenfalls Koinitiators erfolgen oder man gibt den Initiator und/oder Koinitiator während der Copolymerisation portionsweise oder kontinuierlich zur polymerisierenden Mischung zu. Die Copolymerisation wird vorzugsweise diskontinuierlich in Rührkesseln durchgeführt, wobei man eine geringe Menge der zu polymerisierenden Mischung, z.B. 5 % vorlegt und dem Rest der Monomeren kontinuierlich oder absatzweise in den Kessel einbringt und ständig für gute Durchmischung sorgt. Die Copolymerisation wird üblicherweise unter einer Inertgasatmosphäre, z.B. unter Stickstoff, durchgeführt. Vinylformiat wird vorzugsweise in die polymerisierende Mischung im Laufe der Copolymerisation zudosiert. Selbstverständlich ist es auch möglich, Vinylformiat vorzulegen und die anderen Comonomeren zuzudosieren.

Die Copolymerisation wird beispielsweise bei Temperaturen von 10 bis 150, vorzugsweise 20 bis 100°C durchgeführt. Sofern die Temperaturen bei der Copolymerisation oberhalb des Siedepunkts der Reaktionsmischung liegen, führt man die Copolymerisation unter Druck in dafür geeigneten Apparaturen, z.B. Druckkesseln oder rührbaren Autoklaven durch. In den meisten Fällen polymerisiert man unter Normaldruck bei Temperaturen von 30 bis 70°C.

Als Polymerisationsinitiatoren kommen prinzipiell sämtliche hierfür gebräuchlichen Verbindungen in Betracht, die unter den Polymerisationsbedingungen Radikale bilden, z.B. Peroxide, Hydroperoxide, Peroxodisulfate, Percarbonate, Peroxyester, Wasserstoffperoxid und Azoverbindungen. Beispiele für Initiatoren, die wasserlöslich oder wasserunlöslich sein können, sind Wasserstoffperoxid, Dibenzoylperoxid, Dicyclohexylperoxidicarbonat, Dilaurylperoxid, Methylethylketonperoxid, Acetylacetonperoxid, tert.-Butylhydroperoxid, Cumolhydroperoxid, tert.-Butylperneodecanoat, tert.-Amylperpivalat, tert.-Butylperpivalat, tert.-Butylperneohexanoat, tert.-Butylper-2-ethylhexanoat, tert.-Butylperbenzoat, Lithium-, Natrium-, Kalium- und Ammoniumperoxidisulfat, Azodiisobutyronitril, 2,2'-Azobis(2-amidinopropan)dihydrochlorid, 2,2'-Azobis(N,N'-dimethylen)isobutyramidin-dihydrochlorid, 2-(Carbamoylazo)isobutyronitril und 4,4'-Azobis (4-cyanovaleriansäure).

Die Initiatoren können entweder allein oder in Mischung untereinander eingesetzt werden, z.B. Mischungen aus Wasserstoffperoxid und Natriumperoxidisulfat. Bei der Polymerisation in wäßrigen Medien werden bevorzugt wasserlösliche Initiatoren verwendet. Auch die bekannten Redoxkatalysatoren können als Polymerisationsinitiatoren verwendet werden. Solche Systeme enthalten beispielsweise mindestens einer der oben beschriebenen peroxidgruppenhaltigen Verbindungen in Kombination mit einem Reduktionsmittel, z.B. reduzierend wirkenden Schwefel- oder Phosphorverbindungen, beispielsweise Bisulfiten, Sulfiten, Thiosulfaten, Dithioniten und Tetrathionaten von Alkalimetallen und Ammoniumverbindungen, Natriumhypophosphit, phosphorige Säure und Phosphite wie Natriumphosphit, Kalium- und Ammoniumphosphit. Außerdem kann Schwefeldioxid als reduzierend wirkende Schwefelverbindung verwendet werden. Weitere Reduktionsmittel für Redoxkatalysatoren sind beispielsweise Ascorbinsäure, Ameisensäure und Aldehyde, wie Formaldehyd oder Acetaldehyd.

Die Redoxkatalysatoren können zusätzlich Salze von Übergangsmetallen enthalten, z.B. Salze von Eisen, Kobalt, Nickel, Kupfer, Vanadium und Mangan. Geeignete Salze sind z.B. Eisen-II-sulfat, Kobalt-II-chlorid, Nickel-II-sulfat, Kupfer-I-chlorid, Mangan-II-acetat, Vanadin-III-acetat und Mangan-II-chlorid. Die bekannten Redoxkatalysatoren können die reduzierende Komponente in einem molaren Verhältnis von 0,05 bis 1 Mol pro Mol der oxidierenden Komponente enthalten. Die Schwermetallionen werden üblicherweise in Mengen von 0,1 ppm bis 0,2 %, bezogen auf den Redoxinitiator, eingesetzt.

Die Initiatoren werden im allgemeinen in Mengen von 0,05 bis 30, vorzugsweise 1 bis 15 Gew.-%, bezogen auf die zu polymerisierenden Monomeren, verwendet. Bei der Polymerisation in wäßrigem Medium setzt man vorzugsweise Redoxkatalysatoren ein, wobei man, bezogen auf die zu polymerisierenden Monomeren, 0,5 bis 25 Gew.-% mindestens eines peroxidgruppenaufweisenden Initiators und 0,05 bis 30 Gew.-% mindestens eines Reduktionsmittels einsetzt. Bevorzugt werden dabei Kombinationen von Peroxodisulfaten mit Alkalimetall- oder Ammoniumhydrogensulfiten. Beispielsweise verwendet man, jeweils bezogen auf die zu polymerisierenden Monomeren, 1 bis 15 Gew.-% Natrium- oder Kaliumperoxidisulfat und 0,5 bis 25 Gew.-% Natrium- oder Kaliumbisulfit. Um besonders restmonomerenarme Polymerisate herzustellen wendet man, bezogen auf die zu polymerisierenden Monomeren, 2 bis 10 Gew.-% an Peroxodisulfaten und 2 bis 20 Gew.-% an Bisulfiten an.

Wenn man die Copolymerisation in organischen Lösemittel durchführt, verwendet man Initiatoren, die in den organischen Lösemitteln löslich sind, z.B. Acetylcyclohexansulfonylperoxid, Diacetylperoxidicarbonat, Dicyclohexylperoxidicarbonat, Di-2-ethylhexylperoxidicarbonat, tert.-Butylperneodecanoat, tert.-Butylperpivalat, Dilauroylperoxid, 2,2'-Azo-bis(2,4-dimethylvaleronitril), tert.-Butylper-2-ethylhexanoat, tert.-Butylperacetat, Di-tert.-butyl-peroxid, Cumolhydroperoxid und/oder tert.-Butylhydroperoxid.

Die sauren Monomeren können gegebenenfalls in teilneutralisierter Form bei der Copolymerisation eingesetzt werden. Der Neutralisationsgrad beträgt beispielsweise 5 bis 75 % und liegt meistens in dem Bereich von 10 bis 50 Gew.-%. Besonders bevorzugt sind Neutralisationsgrade unterhalb von 25 %. Die Neutralisation der sauren Monomeren erfolgt beispielsweise mit Alkalimetall-, Erdalkalimetall- und Ammoniumbasen, z.B. mit Natronlauge, Kalilauge, Ammoniak, Magnesiumoxyd, Kalziumoxid, Kalziumhydroxid, Soda, Natriumhydrogencarbonat, Kaliumcarbonat oder Bariumoxid.

Bevorzugt ist die Copolymerisation von Monomermischungen aus
(a) 25 bis 75 mol.-% Vinylformiat,
(b) 20 bis 70 mol.% monoethylenisch ungesättigten Carbonsäuren und
(c) 5 bis 55 mol.-% monoethylenisch ungesättigten Dicarbonsäuren
in wäßrigem Medium in Gegenwart von 2 bis 30 Gew.-% Peroxosulfaten und/oder Hydroperoxiden. Die Copolymerisation in wäßrigem Medium oder in reinem Wasser als Lösemittel wird vorzugsweise in Gegenwart von 0,05 bis 30, vorzugsweise 0,5 bis 15 Gew.-% eines oberflächenaktiven Mittels durchgeführt. Der Zusatz eines oberflächenaktiven Mittels zum Polymerisationsgemisch begünstigt den gleichmäßigen Einbau des Vinylformiats in das Copolymerisat und wirkt gleichzeitig der Zersetzung von Vinylformiat zu Ameisensäure und Acetaldehyd entgegen.

Als oberflächenaktive Mittel kommen sämtliche Verbindungen in Betracht, die die Oberflächenspannung von Wasser erniedrigen. Solche Verbindungen werden üblicherweise bei der Emulsionspolymerisation als Emulgator verwendet. Geeignete oberflächenaktive Mittel sind beispielsweise alkoxylierte Alkohole, alkoxylierte Phenole, alkoxylierte Amine, alkoxylierte Carbonsäuren, Alkylpolyglycoside, Alkylsulfate, Alkylsulfonate, Alkylbenzolsulfonate und/oder Blockcopolymerisate von Ethylenoxid und Propylenoxid.

Besonders geeignete alkoxylierte Alkohole werden z.B. durch Ethoxylierung von Alkoholen mit 8 bis 22 C-Atomen hergestellt, wobei man sowohl natürliche als auch synthetische Alkohole verwenden kann. Die Alkohole können geradkettig oder verzweigt sein und gegebenenfalls noch Hydroxylgruppen aufweisen oder auch eine oder mehrere monoethylenisch ungesättigte Doppelbindungen enthalten. Die Alkohole können mit 2 bis 50, vorzugsweise 3 bis 25 Mol Ethylenoxid pro Mol Alkohol umgesetzt sein. Man kann ebenso auch Blockcopolymerisate einsetzen, die durch stufenweise Alkoxylierung von Alkoholen mit beispielsweise Ethylenoxid und dann Propylenoxid und gegebenenfalls Butylenoxid erhältlich sind. Die Anordnung der Alkylenoxidblöcke kann dabei beliebig sein. Die Anlagerung von Alkylenoxiden an Alkohole kann auch mit einem Gemisch von Alkylenoxiden vorgenommen werden, so daß statistisch aufgebaute alkoxylierte Alkohole entstehen.

Nach dem gleichen Herstellungsprinzip erhält man die anderen alkoxylierten Verbindungen, indem man mindestens ein Alkylenoxid an Alkylphenole, Amine oder Carbonsäuren anlagert. Die Alkylphenole enthalten üblicherweise 1 bis 12 C-Atome in der Alkylgruppe. Die Amine können beispielsweise eine oder mehrere Aminogruppen im Molekül enthalten und 8 bis 22 C-Atome haben.

Die zur Alkoxylierung eingesetzten Carbonsäuren haben vorzugsweise 8 bis 22 C-Atome im Molekül.

Alkylsulfate und Alkylsulfonate sind - wie die anderen genannten oberflächenaktiven Mittel - handelsübliche Stoffe. Die Alkylgruppe enthält in den meisten Fällen 12 bis 16 C-Atome.
Die Alkylgruppe in den Alkylbenzolsulfonaten leitet sich beispielsweise von geradkettigen oder verzweigten Alkylresten mit 8 bis 16 C-Atomen ab. Geeignete Blockcopolymerisate aus Ethylenoxid und Propylenoxid können beispielsweise Molekulargewichte (Zahlenmittel) von 300 bis 10.000 haben.

In den meisten Fällen arbeitet man mit Mengen an oberflächenaktiven Mitteln von 0,75 bis 10 Gew.-%, bezogen auf die Monomeren. Die Menge an Wasser oder organischen Lösemitteln wird beispielsweise so gewählt, daß man Polymerisatlösungen oder Polymerisatsuspensionen mit einer Konzentration von 10 bis 80, vorzugsweise 30 bis 70 Gew.-% Polymer erhält.

Bei hoher Konzentration können die Copolymerisate aus den Lösungen ausfallen. Sie können jedoch durch Neutralisieren mit Alkalimetallbasen oder Ammoniak wieder gelöst oder zumindest stabil und homogen dispergiert werden. Die Copolymerisate haben beispielsweise K-Werte von 10 bis 120, meistens von 10 bis 70 (bestimmt nach H. Fikentscher in 1 gew.-%iger wäßriger Lösung am Na-Salz der Copolymerisate bei pH 7 und 25°C).

Die Vinylformiat einpolymerisiert enthaltenden Copolymerisate können gegebenenfalls durch Solvolyse und/oder Oxidation modifiziert werden. Um die Copolymerisate zu hydrolysieren, kann man beispielsweise die bei der Copolymerisation erhaltenen Lösungen durch Zugabe von Natronlauge oder Kalilauge auf pH-Werte oberhalb von 8 einstellen und gegebenenfalls durch Erhöhung der Temperatur der Lösung bis auf z.B. 100°C die Hydrolyse der einpolymerisierten Vinylformiatgruppen unter Bildung von Vinylalkoholeinheiten beschleunigen. Die Hydrolyse kann partiell, z.B. zu 5 bis 90 %, oder auch vollständig durchgeführt werden. Der K-Wert der hydrolysierten Copolymerisate liegt ebenfalls in dem Bereich von 10 bis 120.

Man kann die Copolymerisate gegebenenfalls auch oxidieren, wobei in den meisten Fällen ein Molekulargewichtsabbau beobachtet wird. Dementsprechend ändert sich auch der K-Wert der oxidierten Copolymerisate. Er kann beispielsweise 2 bis 50 Einheiten unter dem K-Wert der bei der Copolymerisation erhältlichen Copolymerisate liegen. Die Oxidation der Copolymerisate wird vorzugsweise in wäßriger Lösung vorgenommen. Als Oxidationsmittel kommen alle Aktivsauerstoff abgebenden Verbindungen in Betracht, beispielsweise alkalische Hypochloritlösungen, Ozon oder Wasserstoffperoxid. Die Oxidation kann z.B. bei Temperaturen von 10 bis 100°C erfolgen. Da die Oxidation vorzugsweise in alkalischem Medium vorgenommen wird, beobachtet man dabei auch eine mehr oder weniger stark ausgeprägte Hydrolyse der Copolymerisate. Bei der oxidativen Nachbehandlung der Copolymerisate setzt man beispielsweise 0,1 bis 30, vorzugsweise 2,5 bis 25 Gew.-% mindestens eines Oxidationsmittels, bezogen auf die Copolymerisate ein. Aufgrund der oxidativen Behandlung werden die dispergierenden Eigenschaften der Copolymerisate verbessert.

Die nach dem erfindungsgemäßen Verfahren erhältlichen Copolymerisate sowie die daraus durch Hydrolyse und/oder Oxidation erhältlichen Vinylalkoholeinheiten aufweisenden Copolymerisate werden als Zusatz zu Wasch- und Reinigungsmitteln verwendet. Sie haben in phosphatreduzierten (Phosphatgehalt < 25 Gew.-%) und phosphatfreien Formulierungen eine ausgeprägte inkrustationsinhibierende Wirkung und können darin in Mengen von 0,1 bis 30, vorzugsweise 1 bis 15 Gew.-%, bezogen auf die jeweiligen Formulierungen, enthalten sein.

Die Wasch- und Reinigungsmittel enthalten mindestens ein Tensid und gegebenenfalls sonstige übliche Bestandteile. Vorzugsweise werden solche Tenside verwendet, die biologisch abbaubar sind.

Die Waschmittel können pulverförmig sein oder auch in flüssiger Einstellung vorliegen. Die Zusammensetzung der Wasch- und Reinigungsmittelformulierungen kann sehr unterschiedlich sein. Wasch- und Reinigungsmittelformulierungen enthalten üblicherweise 2 bis 50 Gew.-% Tenside und gegebenenfalls Builder. Diese Angaben gelten sowohl für flüssige als auch für pulverförmige Waschmittel. Wasch- und Reinigungsmittelformulierungen, die in Europa, in den USA und in Japan gebräuchlich sind, findet man beispielsweise in Chemical und Engn. News, Band 67, 35 (1989) tabellarisch dargestellt. Weitere Angaben über die Zusammensetzung von Wasch- und Reinigungsmitteln können der WO-A-90/13581 sowie Ullmanns Encyklopädie der technischen Chemie, Verlag Chemie, Weinheim 1983, 4. Auflage, Seiten 63-160, entnommen werden. Die Waschmittel können gegebenenfalls noch ein Bleichmittel enthalten, z.B. Natriumperborat, das im Fall seines Einsatzes in Mengen bis zu 30 Gew.-% in der Waschmittelformulierung enthalten sein kann. Die Wasch- und Reinigungsmittel können gegebenenfalls weitere übliche Zusätze enthalten, z.B. Komplexbildner, Trübungsmittel, optische Aufheller, Enzyme, Parfümöle, Farbübertragungsinhibitoren, Vergrauungsinhibitoren, schmutzablösungsfördernde Polymere (soil release polymere) und/oder Bleichaktivatoren.

Die K-Werte der Copolymerisate wurden nach H. Fikentscher, Cellulose-Chemie, Band 13, 58 - 64 und 71 - 74 (1932) in wäßriger Lösung an den Natriumsalzen der Copolymerisate bei einer Konzentration von 1 Gew.-%, einem pH-Wert von 7 und einer Temperatur von 25°C bestimmt.

Die Prozentangaben in den Beispielen sind Gewichtsprozent.

### Beispiele

### Beispiel 1

In einem gerührten 2-1-Glasreaktor mit Ankerrührer und 4 Zulaufgefäßen wurden 49,1 g Maleinsäureanhydrid zusammen mit 18,0 g der 20%igen wäßrigen Lösung eines Anlagerungsproduktes von 25 mol Ethylenoxid an Isooctylphenol und 10,3 g der 35%igen wäßrigen Lösung des Sulfats eines Anlagerungsproduktes von 125 mol Ethylenoxid an Isooctylphenol in 190 ml Wasser vorgelegt, mit 20,2 g 50%iger Natronlauge teilneutralisiert und unter Inertgas auf 45°C Innentemperatur aufgeheizt. Zu dieser Lösung dosierte man innerhalb von 5 h 180 g Vinylformiat und 144,2 g Acrylsäure als getrennte Zuläufe. Gleichbeginnend dosierte man innerhalb von 6 h eine Lösung von 18,7 g Natriumperoxodisulfat in 168,3 ml Wasser und 28,0 g Natriumbisulfit in 250 ml Wasser zu. Die Temperatur der Reaktionsmischung wurde dabei auf 45°C gehalten. Nach Ende der Zuläufe wurde die Reaktionsmischung weitere 2 h auf 45°C erhitzt. Die Lösung wurde auf Raumtemperatur abgekühlt und unter Kühlung mit Natronlauge auf pH7 gestellt. Das Polymer hatte einen K-Wert von 50,4.

### Beispiel 2

In einem gerührten 2 1 Glasreaktor mit Ankerrührer und 4 Zulaufgefäßen wurden 98,7 g Maleinsäureanhydrid zusammen mit 12,5 g der 20%igen wäßrigen Lösung eines Anlagerungsproduktes von 25 mol Ethylenoxid an Isooctylphenol und 7,2 g der 35%igen wäßrigen Lösung des Sulfats eines Anlagerungsproduktes von 25 mol Ethylenoxid an Isooctylphenol in 190 ml Wasser vorgelegt, mit 80,5 g 50%iger Natronlauge teilneutralisiert und unter Inertgas auf 45°C Innentemperatur aufgeheizt. Zu dieser Lösung dosierte man innerhalb von 5 h 125,2 g Vinylformiat und 175,3 g Acrylsäure als getrennte Zuläufe. Gleichbeginnend dosierte man innerhalb von 6 h eine Lösung von 20,4 g Natriumperoxodisulfat in 183,8 ml Wasser und 28,0 g Natriumbisulfit in 263 ml Wasser zu. Die Innentemperatur der Reaktionsmischung wurde dabei auf 45°C gehalten. Nach Ende der Zuläufe wurde die Reaktionsmischung weitere 2 h auf 45°C erhitzt. Die Lösung wurde auf Raumtemperatur abgekühlt und unter Kühlung mit Natronlauge auf pH7 gestellt. Das Polymer hatte einen K-Wert von 37,4.

### Beispiel 3

In einem gerührten 2-1-Glasreaktor mit Ankerrührer und 4 Zulaufgefäßen wurden 56,4 g Maleinsäureanhydrid zusammen mit 25,0 g der 20%igen wäßrigen Lösung eines Anlagerungsproduktes von 25 mol Ethylenoxid an Isooctylphenol und 14,3 g der 35%igen wäßrigen Lösung des Sulfats eines Anlagerungsproduktes von 25 mol Ethylenoxid an Isooctylphenol in 190 ml Wasser vorgelegt, mit 46,0 g 50%iger Natronlauge teilneutralisiert und unter Inertgas auf 45°C Innentemperatur aufgeheizt. Zu dieser Lösung dosierte man innerhalb von 5 h 250 g Vinylformiat und 100,2 g Acrylsäure als getrennte Zuläufe. Gleichbeginnend dosierte man innerhalb von 6 h eine Lösung von 20,4 g Natriumperoxodisulfat in 183,8 ml Wasser und 28,0 g Natriumbisulfit in 263 ml Wasser zu. Die Innentemperatur der Reaktionsmischung wurde dabei auf 45°C gehalten. Nach Ende der Zuläufe wurde die Reaktionsmischung weitere 2 h auf 45°C erhitzt. Die Lösung wurde auf Raumtemperatur abgekühlt und unter Kühlung mit Natronlauge auf pH7 gestellt. Das Polymer hatte einen K-Wert von 41,7.

### Beispiel 4

In einem gerührten 2-1-Glasreaktor wird eine Lösung von 138,2 g Maleinsäureanhydrid in 518,1 g Xylol vorgelegt und mit Stickstoff inertisiert. Die Vorlage wird auf 85°C aufgeheizt. Zu dieser Lösung wird innerhalb von 2 h eine Lösung von 100,8 g Acrylsäure und 100,8 g Vinylformiat in 221,2 g Xylol zudosiert. Gleichbeginnend dosiert man eine Lösung von 7,11 g tert.-Butylper-2-ethylhexanoat in 92,9 g Xylol innerhalb von 3 h zu. Die Innentemperatur wird während der Polymerisation bei 80°C gehalten. Nach Ende der Zuläufe wird die Reaktionsmischung eine weitere Stunde auf 80°C erhitzt. Das entstandene Polymerisat wird durch Filtration abgetrennt und getrocknet.

### Beispiel 5

100 g des Polymerisats aus Beispiel 4 werden mit 200 ml vollentsalztem Wasser versetzt und bei Siedetemperatur 2 h erhitzt. Die Lösung wird anschließend mit 94 g Natronlauge (50%) neutralisiert. Das Polymer hatte einen K-Wert von 39,7.

### Beispiel 6

In einem gerührten 2-1-Glasreaktor wird eine Lösung von 137,2 g Maleinsäureanhydrid in 520,5 g Tetrahydrofuran vorgelegt und mit Stickstoff inertisiert. Die Vorlage wird auf 65°C aufgeheizt. Zu dieser Lösung wird innerhalb von 2 h eine Lösung von 100,8 g Acrylsäure und 100,8 g Vinylformiat in 221,2 g Tetrahydrofuran zudosiert. Gleichbeginnend dosiert man eine Lösung von 9,48 g tert.-Butyl-perpivalat in 90,5 Tetrahydrofuran innerhalb von 3 h zu. Die Innentemperatur wird während der Polymerisation bei 65°C gehalten. Nach Ende der Zuläufe wird die Reaktionsmischung eine weitere Stunde auf 65°C erhitzt. Durch Einleiten von Wasserdampf wird Tetrahydrofuran als Azeotrop abdestilliert. Die erhaltene wäßrige Lösung des Terpolymeren wird mit Natronlauge auf pH7 gestellt. Das Polymer hatte einen K-Wert von 15,6.

### Anwendungstechnische Beispiele

Die inkrustationsinhibierenden Eigenschaften der Polymeren wurden im Waschtest ermittelt. Hierzu wurde jeweils Testgewebe aus Baumwolle-gewaschen. Die Zahl der Waschcyclen betrug 15. Nach dieser Anzahl von Wäschen wurde der Aschegehalt des Gewebes ermittelt, indem man das Testgewebe jeweils veraschte. Je niedriger der Aschegehalt nach der wiederholten Wäsche, desto wirksamer ist das Polymer als Inkrustationsinhibitor. Die erhaltenen Aschewerte sind in Tabelle 3 angegeben. Die erfindungsgemäßen Copolymeren zeigen deutliche Wirksamkeit, erkennbar an Vergleichsbeispiel 1 (ohne Polymer) und Vergleichsbeispiel 2 mit einem handelsüblichen Copolymer als Inkrustationsinhibitor. Die erfindungsgemäßen Polymere zeigen im Vergleich zum Standard zum Teil deutliche Verbesserungen.

**Tabelle 1:**

| Waschbedingungen | |
|---|---|
| Waschgerät | Launderometer |
| Waschmittelflotte | 250 g |
| Waschmitteldosierung | 6 g/l |
| Waschzeit | 30 min |
| Waschtemperatur | 60°C |
| Flottenverhältnis | 1:12,5 |
| Anzahl der Waschzyclen | 15 |
| Prufgewebe | 20 g Baumwollgewebe |

**Tabelle 2:**

| Waschmittelzusammensetzung | |
|---|---|
| | Gew.-% |
| Alkylbenzolsulfonat | 8,00 |
| C₁₃/C₁₅-Oxoalkohol ethodyliert mit 7 EO ¹) | 7,00 |
| Fettsäure-Na-Salz | 2,00 |
| Carboxymethylcellulose | 1,00 |
| Zeolith A (Wessalith P) | 36,00 |
| Natriumcarbonat | 12,00 |
| Na-Perborat * 3 H₂O | 22,0 |
| TAED ²) | 2,0 |
| optischer Aufheller | 0,20 |
| Enzyme | 0,50 |
| Polymer (Testsubstrat) | 5,00 |
| Na-Sulfat | Rest auf 100 |

| | |
|---|---|
| ¹) EO = Ethylenoxid | |
| ²) TAED = Tetraacetylethylendiamin | |

Die Ergebnisse der Waschversuche sind in der Tabelle 3 wiedergegeben:

**Tabelle 3:**

| Waschserie | | | |
|---|---|---|---|
| Beispiel Nr. | Vergleichsbeispiel Nr. | Polymer Nr. | Asche [%] |
| 7 | - | 1 | 2,1 |
| - | 1 | - | 3,2 |
| 8 | - | 6 | 0,8 |
| - | 2 | AS/MS ³) | 2,2 |

| | | | |
|---|---|---|---|
| ³) Copolymer aus Acrylsäure und Maleinsäure im Gew.-Verhältnis 70:30 mit einem K-Wert (gemessen am Na-Salz in 1%iger wäßriger Lösung) von 60. | | | |

## Patentansprüche

1. Vinylformiateinheiten enthaltende Copolymerisate, dadurch gekennzeichnet, daß sie
(a) 5 bis 90 Mol-% Vinylformiateinheiten,
(b) 10 bis 95 Mol-% Einheiten von monoethylenisch ungesättigten Carbonsäuren,
(c) 0 bis 70 Mol-% Einheiten von monoethylenisch ungesättigten Dicarbonsäuren und
(d) 0 bis 30 Mol-% Einheiten von anderen monoethylenisch ungesättigten Monomeren
einpolymerisiert enthalten und K-Werte von mindestens 8 (bestimmt nach H. Fikentscher in 1 gew.-%iger wäßriger Lösung am Na-Salz der Copolymerisate bei pH 7 und 25°C) aufweisen.

2. Vinylformiateinheiten enthaltende Copolymerisate nach Anspruch 1, dadurch gekennzeichnet, daß sie
(a) 25 bis 75 Mol-% Vinylformiateinheiten,
(b) 20 bis 70 Mol-% Einheiten von monoethylenisch ungesättigten Carbonsäuren und
(c) 5 bis 55 Mol-% Einheiten von monoethylenisch ungesättigten Dicarbonsäuren
einpolymerisiert enthalten.

3. Verfahren zur Herstellung von Vinylformiateinheiten enthaltenden Copolymerisaten nach Anspruch 1 oder 2, dadurch gekennzeichnet, daß man Monomermischungen aus
(a) 5 bis 90 Mol-% Vinylformiat,
(b) 10 bis 95 Mol-% monoethylenisch ungesättigten Carbonsäuren,
(c) 0 bis 70 Mol-% monoethylenisch ungesättigten Dicarbonsäuren und
(d) 0 bis 30 Mol-% anderen monoethylenisch ungesättigten Monomeren
in wäßrigem Medium oder in einem organischen Lösemittel in Gegenwart von Radikale bildenden Polymerisationsinitiatoren copolymerisiert.

4. Verfahren nach Anspruch 3, dadurch gekennzeichnet, daß man Monomermischungen aus
(a) 25 bis 75 Mol-% Vinylformiat,
(b) 20 bis 70 Mol-% monoethylenisch ungesattigten Carbonsäuren und
(c) 5 bis 55 Mol-% monoethylenisch ungesättigten Dicarbonsäuren
in wäßrigem Medium in Gegenwart von 2 bis 30 Gew.-% Peroxosulfaten und/oder Hydroperoxiden copolymerisiert.

5. Verfahren nach Anspruch 3 oder 4, dadurch gekennzeichnet, daß man die Copolymerisation in Gegenwart von 0,05 bis 30 Gew.-%, bezogen auf die Monomeren, mindestens eines oberflächenaktiven Mittels durchführt.

6. Verfahren nach Anspruch 5, dadurch gekennzeichnet, daß man als oberflächenaktive Mittel alkoxylierte Alkohole, alkoxylierte Phenole, alkoxylierte Amine oder alkoxylierte Carbonsäuren, Alkylsulfate, Alkylsulfonate, Alkylbenzolsulfonate und/oder Blockcopolymerisate von Ethylenoxid und Propylenoxid einsetzt.

7. Verwendung der Vinylformiateinheiten enthaltenden Copolymerisate nach den Ansprüchen 1 und 2 sowie der daraus durch Hydrolyse und/oder Oxidation erhaltlichen Vinylalkoholeinheiten aufweisenden Copolymerisate als Zusatz zu Wasch- und Reinigungsmitteln.

## Claims

1. Vinyl formate copolymers comprising
(a) from 5 to 90 mol% of vinyl formate units,
(b) from 10 to 95 mol% of units of monoethylenically unsaturated carboxylic acids,
(c) from 0 to 70 mol% of units of monoethylenically unsaturated dicarboxylic acids, and
(d) from 0 to 30 mol% of units of other monoethylenically unsaturated monomers
in copolymerized form and having K values of at least 8 (determined by the method of H. Fikentscher in 1% strength by weight aqueous solution on the sodium salt of the copolymers at pH 7 and 25°C).

2. Vinyl formate copolymers as claimed in claim 1, comprising
(a) from 25 to 75 mol% of vinyl formate units,
(b) from 20 to 70 mol% of units of monoethylenically unsaturated carboxylic acids, and
(c) from 5 to 55 mol% of units of monoethylenically unsaturated dicarboxylic acids
in copolymerized form.

3. A process for preparing vinyl formate copolymers as claimed in claim 1 or 2, which comprises copolymerizing monomer mixtures of
(a) from 5 to 90 mol% of vinyl formate,
(b) from 10 to 95 mol% of monoethylenically unsaturated carboxylic acids,
(c) from 0 to 70 mol% of monoethylenically unsaturated dicarboxylic acids, and
(d) from 0 to 30 mol% of other monoethylenically unsaturated monomers
in an aqueous medium or in an organic solvent in the presence of free-radical polymerization initiators.

4. A process as claimed in claim 3, wherein monomer mixtures of
(a) from 25 to 75 mol% of vinyl formate,
(b) from 20 to 70 mol% of monoethylenically unsaturated carboxylic acids, and
(c) from 5 to 55 mol% of monoethylenically unsaturated dicarboxylic acids
are copolymerized in an aqueous medium in the presence of from 2 to 30% by weight of peroxosulfates and/or hydroperoxides.

5. A process as claimed in claim 3 or 4, wherein the copolymerization is carried out in the presence of from 0.05 to 30% by weight, based on the monomers, of at least one surface-active agent.

6. A process as claimed in claim 5, wherein the surface-active agents used are alkoxylated alcohols, alkoxylated phenols, alkoxylated amines or alkoxylated carboxylic acids, alkyl sulfates, alkylsulfonates, alkylbenzenesulfonates and/or block copolymers of ethylene oxide and propylene oxide.

7. The use of the vinyl formate copolymers of claims 1 and 2 and of the vinyl alcohol copolymers obtainable therefrom by hydrolysis and/or oxidation as laundry detergent and cleaner additives.

## Revendications

1. Copolymères contenant des motifs formiate de vinyle, caractérisés en ce qu'ils contiennent en liaison polymère
(a) 5 à 90 % en moles de motifs formiate de vinyle,
(b) 10 à 95 % en moles de motifs d'acides carboxyliques à insaturation monoéthylénique,
(c) 0 à 70 % en moles de motifs d'acides dicarboxyliques à insaturation monoéthylénique et
(d) 0 à 30 % en moles de motifs d'autres monomères à insaturation monoéthylénique
et ont des valeurs de K d'au moins 8 (déterminées selon H. Fikentscher dans une solution aqueuse à 1% en poids du sel sodique du copolymère à pH 7 et à 25°C).

2. Copolymères contenant des motifs formiate de vinyle selon la revendication 1, caractérisés en ce qu'ils contiennent en liaison polymère
(a) 25 à 75 % en moles de motifs formiate de vinyle,
(b) 20 à 70 % en moles de motifs d'acides carboxyliques à insaturation monoéthylénique et
(c) 5 à 55 % en moles de motifs d'acides dicarboxyliques à insaturation monoéthylénique.

3. Procédé de préparation de copolymères contenant des motifs formiate de vinyle selon la revendication 1 ou 2, caractérisé en ce que l'on copolymérise des mélanges de monomères constitués de
(a) 5 à 90 % en moles de formiate de vinyle,
(b) 10 à 95 % en moles d'acides carboxyliques à insaturation monoéthylénique,
(c) 0 à 70 % en moles d'acides dicarboxyliques à insaturation monoéthylénique et
(d) 0 à 30 % en moles d'autres monomères à insaturation monoéthylénique
en milieu aqueux ou dans un solvant organique, en présence d'amorceurs de polymérisation formant des radicaux.

4. Procédé selon la revendication 3, caractérisé en ce que l'on copolymérise des mélanges de monomères constitués de
(a) 25 à 75 % en moles de formiate de vinyle,
(b) 20 à 70 % en moles d'acides carboxyliques à insaturation monoéthylénique et
(c) 5 à 55 % en moles d'acides dicarboxyliques à insaturation monoéthylénique
en milieu aqueux, en présence de 2 à 30 % en poids de peroxosulfates et/ou d'hydroperoxydes.

5. Procédé selon la revendication 3 ou 4, caractérisé en ce que l'on effectue la copolymérisation en présence de 0,05 à 30 % en poids, par rapport aux monomères, d'au moins un agent tensioactif.

6. Procédé selon la revendication 5, caractérisé en ce que l'on utilise en tant qu'agent tensioactif des alcools alcoxylés, des phénols alcoxylés, des amines alcoxylées ou des acides carboxyliques alcoxylés, des alkylsulfates, des alkylsulfonates, des alkylbenzènesulfonates et/ou des copolymères séquencés d'oxyde d'éthylène et d'oxyde de propylène.

7. Utilisation de copolymères contenant des motifs formiate de vinyle selon les revendications 1 ou 2 ainsi que des copolymères contenant des motifs alcool vinylique obtenus à partir de ceux-ci par hydrolyse et/ou oxydation, en tant qu'additif pour agents de lavage et de nettoyage.
